# EUROPÄISCHE PATENTANMELDUNG

(11) **EP 3 181 432 A2**
(43) Veröffentlichungstag der Anmeldung: **21.06.2017**
(21) Anmeldenummer: 16200025.1
(22) Anmeldetag: 22.11.2016
(51) Int. Cl.: B62D 13/02

(54) **ROUTENZUG-MODULEINHEIT UND ROUTENZUG**

(30) Priorität: 15.12.2015 DE 102015225295
(71) Anmelder: Neumaier Industry GmbH & Co. KG, 77716 Hofstetten (DE)
(72) Erfinder: Neumaier, Bernd, 77716 Hofstetten (DE)
(74) Vertreter: Patentanwälte Ruff, Wilhelm, Beier, Dauster & Partner mbB

(57) **Zusammenfassung**

Die Erfindung betrifft eine Routenzug-Moduleinheit zum Aufbau eines Routenzugs aus mehreren hintereinander gekoppelten Routenzug-Moduleinheiten, einen Routenzug sowie ein Verfahren zum Be- und/oder Entladen eines Routenzugs, wobei die Routenzug-Moduleinheiten (3, 4) eine Fahrwerkeinheit (32) mit einer Radachse (34) und einer Lenkeinrichtung (5) zum Aufbringen einer Lenkkraft auf die Radachse (34), einen auf der Fahrwerkeinheit (32) angeordneten Grundkörper (30, 40), eine von dem Grundkörper (30, 40) mit einem festen Winkel nach vorne abragende Deichsel (31, 41) mit einem ersten Kopplungselement (310, 410) zum Ankoppeln an eine vorausfahrende Routenzug-Moduleinheit (3, 4) oder einen Zugwagen (2), und ein an dem Grundkörper vorgesehenes, mit dem ersten Kopplungselement (310, 410) einer nachfolgenden Routenzug-Moduleinheit zusammenwirkendes zweites Kopplungselement (33, 43) umfassen, mittels der Kopplungselemente (310, 410, 33, 43) die Deichsel (31, 41) einer nachfolgenden Routenzug-Moduleinheit (3, 4) um eine Hochachse verschwenkbar mit dem Grundkörper (30, 40) koppelbar ist und/oder die Deichsel (31, 41) um eine Hochachse verschwenkbar mit dem Grundkörper (30, 40) einer vorausfahrenden Routenzug-Moduleinheit (3, 4) oder mit einem Zugwagen koppelbar ist, und das zweite Kopplungselement (33, 43) in Richtung der Längsachse der Routenzug-Moduleinheit (3, 4) im Bereich der Fahrwerkeinheit (32) an dem Grundkörper (30, 40) angeordnet ist.

## Beschreibung

### ANWENDUNGSGEBIET UND STAND DER TECHNIK

Die Erfindung betrifft eine Routenzug-Moduleinheit zum Aufbau eines Routenzugs aus mehreren hintereinander gekoppelten Routenzug-Moduleinheiten, einen Routenzug sowie ein Verfahren zum Be- und/oder Entladen eines Routenzugs.

Als "Routenzug" wird im Zusammenhang mit der Anmeldung eine beliebige Anzahl von auf Rädern fahrenden, zu einem Zug hintereinander gekoppelten Moduleinheiten bezeichnet, wobei es sich bei den Moduleinheiten üblicherweise um entsprechend ausgebildete einzelne Wagen oder Anhänger handelt.

Routenzüge werden unter anderem für den Lastentransport in Lagergassen großer Lagerhallen verwendet und werden häufig auch mit Begriffen wie Trailerzüge, Gespanne, Wagenverbund, Transportzüge etc. bezeichnet.

Wichtige Aspekte bei der Gestaltung einer Moduleinheit sind ein kleiner Wendekreis des Routenzugs sowie eine Spurtreue. Die Moduleinheiten sollen möglichst exakt der Fahrspur einer vorausgehenden Moduleinheit oder eines Zugwagens folgen, ohne abzukürzen und ohne aus der Spur auszubrechen. Bekannte Moduleinheiten weisen zu diesem Zweck lenkbare Radachsen auf.

Moduleinheiten mit einer starren Deichsel und einer an einem Fahrwerk angeordneten, lenkbaren Radachse sind beispielsweise aus US 6,193,257 B1 bekannt, wobei die Moduleinheiten jeweils durch die vorne an einem Grundkörper angebrachte Deichsel mit einer vorausfahrenden Moduleinheit gekoppelt werden. Die vorausfahrende Moduleinheit weist zu diesem Zweck an ihrem hinteren Ende ein nach hinten abragendes passendes Kopplungselement auf. Die Fahrwerke weisen jeweils eine Lenkeinrichtung zum Aufbringen einer Lenkkraft auf die Radachse auf. Die Lenkeinrichtungen umfassen jeweils in Längsrichtung der Wagen verschieblich geführte Lenkstangen, wobei die Lenkstangen der Wagen miteinander gekoppelt sind.

### AUFGABE UND LÖSUNG

Es ist eine Aufgabe der Erfindung, eine Routenzug-Moduleinheit zu schaffen, welche einen einfachen Aufbau eines Routenzugs mit einem geringen Wenderadius ermöglicht. Es sind weitere Aufgaben einen zugehörigen Routenzug sowie ein Verfahren zum Be- und/oder Entladen zu schaffen.

Gemäß einem ersten Aspekt wird eine Routenzug-Moduleinheit zum Aufbau eines Routenzugs aus mehreren hintereinander gekoppelten Routenzug-Moduleinheiten umfassend eine Fahrwerkeinheit mit einer Radachse und einer Lenkeinrichtung zum Aufbringen einer Lenkkraft auf die Radachse, einen auf der Fahrwerkeinheit angeordneten Grundkörper, eine von dem Grundkörper mit einem festen Winkel nach vorne abragende Deichsel mit einem ersten Kopplungselement zum Ankoppeln an eine vorausfahrende Routenzug-Moduleinheit oder einen Zugwagen und ein an dem Grundkörper vorgesehenes, mit dem ersten Kopplungselement einer nachfolgenden Routenzug-Moduleinheit zusammenwirkendes zweites Kopplungselement geschaffen, wobei mittels der Kopplungselemente die Deichsel einer nachfolgenden Routenzug-Moduleinheit um eine Hochachse verschwenkbar mit dem Grundkörper koppelbar ist und/oder die Deichsel um eine Hochachse verschwenkbar mit dem Grundkörper einer vorausfahrenden Routenzug-Moduleinheit oder einem Zugwagen koppelbar ist, und wobei das zweite Kopplungselement in Richtung der Längsachse der Routenzug-Moduleinheit im Bereich der Fahrwerkeinheit an dem Grundkörper angeordnet ist.

Dadurch wird eine Routenzug-Moduleinheit mit einer starren Deichsel geschaffen, welche aufgrund der Anordnung des zweiten Kopplungselements im Bereich der Fahrwerkeinheit einen geringen Wendekreis aufweist. Als Radachse wird im Zusammenhang mit der Anmeldung eine Achse bezeichnet, um welche ein Rad oder mehrere Räder drehbar gelagert ist/sind. Die Räder einer Radachse sind dabei je nach Ausgestaltung einer Lenkeinrichtung auf einer gemeinsamen Welle oder auch koaxial in Längsrichtung versetzt angeordneten Wellenelementen gelagert.

Zum Ankoppeln an eine voranfahrende Routenzug-Moduleinheit ist eine Deichsel an der Routenzug-Moduleinheit vorgesehen, welche in einem festen Winkel bezüglich der Längsachse mit dem Grundkörper verbunden ist. Vorzugsweise ist eine gerade Deichsel vorgesehen, welche parallel zur Längsrichtung und insbesondere mittig an dem Grundkörper angreift. Als Verbindung der Deichsel mit dem Grundkörper in einem festen Winkel bezüglich der Längsachse wird im Zusammenhang mit der Anmeldung eine um eine Hochachse drehfeste Verbindung bezeichnet, wobei die Deichsel und der Grundkörper keine relativen Schwenkbewegungen oder nur relative Schwenkbewegungen im Spielbereich und/oder aufgrund von elastischen Eigenschaften der Bauteile um eine Hochachse ausführen. Die Deichsel dient dabei insbesondere nicht zum Übertragen einer Lenkkraft auf die Radachse. Die Deichsel ist in einer Ausgestaltung für ein An- und/oder Abkoppeln um eine Querachse der Moduleinheit verschwenkbar. Der Grundkörper und die Deichsel sind vorzugsweise als getrennt gefertigte, miteinander koppelbare Bauteile gestaltet. In anderen Ausgestaltungen sind der Grundkörper und die Deichsel zumindest teilweise als gemeinsames Bauteil gefertigt.

Die Routenzug-Moduleinheit ist an verschiedene Anforderungen anpassbar. In vorteilhaften Ausgestaltungen ist zu diesem Zweck zwischen der Deichsel und dem Grundkörper ein mit dem Grundkörper verbundener Lastaufnahmerahmen angeordnet. In anderen Worten ist der Lastaufnahmerahmen in Fahrrichtung betrachtet vor dem Grundkörper und vor der Radachse angeordnet. Der Lastaufnahmerahmen ist je nach Anforderungsfall durch den Fachmann geeignet gestaltbar. Beispielsweise ist der Lastaufnahmerahmen als Zweiarm-Lastaufnahmerahmen, als Lastaufnahmerahmen vom Tiefbetttyp, als einseitig offener, eine Gabel aufweisender Lastaufnahmerahmen oder als C-förmiger Lastaufnahmerahmen gestaltbar. Die Aufzählung ist jedoch lediglich beispielhaft und zahlreiche Abwandlungen sind denkbar.

In einer anderen Ausgestaltung weist die Routenzug-Moduleinheit keinen Lastaufnahmerahmen auf und die Deichsel ist an einer Stirnseite des Grundkörpers von dieser abragend angebracht. Dadurch ist eine sehr kurze, insbesondere an einen Zugwagen unmittelbar anschließende Routenzug-Moduleinheit schaffbar, an welche in einer Ausgestaltung nachfolgend Routenzug-Moduleinheiten mit Lastaufnahmerahmen anschließbar sind.

In einer vorteilhaften Ausgestaltung sind die Fahrwerkeinheit und das Kopplungselement in einem Frontbereich des Grundkörpers angeordnet. Die Deichsel einer nachfolgenden Moduleinheit erstreckt sich dabei zumindest teilweise über den Grundkörper der Moduleinheit. Vorzugsweise sind die Deichsel und der Grundkörper hierzu derart gestaltet, dass die Deichsel nicht auf dem Grundkörper aufliegt und frei gegenüber dem Grundkörper um die Hochachse verschwenkbar ist.

Die Kopplungselemente sind in einer Ausgestaltung als Zugbolzen, Zugöse oder Zughaken gestaltet. In vorteilhaften Ausgestaltungen sind die Kopplungselemente für eine spielfreie Anbindung als Kugelkopfkopplungselemente gestaltet.

Aufzunehmende Lasten sind üblicherweise auf Paletten angeordnet, welche je nach Gestaltung des Lastaufnahmerahmens auf diesen beispielsweise mittels geeigneter Einrichtungen aufgesetzt werden. Dabei sind insbesondere auch verfahrbare Palettenträger bekannt, welche in einen sogenannten als C-förmiger Lastaufnahmerahmen von einer Seite einschiebbar sind. In vorteilhaften Ausgestaltungen ist vorgesehen, dass der Grundkörper bezüglich der Radachse höhenveränderlich gelagert ist. Dadurch ist es möglich, den Palettenträger ohne Hubbewegung des Palettenträgers in den Lastaufnahmerahmen einzuschieben. Zum Verfahren des Routenzugs wird der Grundkörper und damit der Lastaufnahmerahmen und - sofern vorhanden - eine aufgenommene Last angehoben. Die Räder des Palettenträgers sind so zu einem Untergrund bei einem Verfahren des Routenzugs beabstandet, sodass keine Kräfte auf die Lager der Räder wirken. Eine derartige höhenveränderliche Lagerung ist unabhängig von einer Anordnung und/oder Gestaltung der Kopplungselemente und auch bei mehrachsigen Routenzug-Moduleinheiten vorteilhaft.

Für eine höhenveränderliche Lagerung ist in einer Ausgestaltung eine Hubeinheit zum Anheben und/oder Absenken des Grundkörpers vorgesehen, wobei die Hubeinheit vorzugsweise als Scheren-Hubwerk gestaltet ist. Als Schenkel des Scheren-Hubwerks fungieren dabei in einer Ausgestaltung der Grundkörper sowie ein Tragrahmen der Fahrwerkeinheit. Dadurch ist eine kleinbauende Gestaltung möglich.

Die Hubeinheit umfasst in vorteilhaften Ausgestaltungen eine ortsfest angeordnete Spindel und einen relativ zu der Spindel verfahrbaren Schlitten. Der Schlitten ist in einer Ausgestaltung gleitend an dem Grundkörper und/oder der Fahrwerkeinheit gelagert.

In vorteilhaften Ausgestaltungen ist der Schlitten mittels Rollenlager verschieblich gelagert. Das Rollenlager umfasst in einer Ausgestaltung einen ortsfest an dem Grundkörper und/oder der Fahrwerkeinheit angeordneten Rollenkäfig. In vorteilhaften Ausgestaltungen weist das Rollenlager einen verschieblich gelagerten Rollenkäfig auf. Der Rollenkäfig kann in dieser Ausgestaltung kürzer als ein Verstellweg des Schlittens gewählt werden. Dabei ist vorzugsweise vorgesehen, dass Rollen des Rollenlagers den Rollenkäfig durchdringen und sowohl einer verschieblichen Lagerung des Schlittens relativ zu dem Rollenkäfig als auch einer verschieblichen Lagerung des Rollenkäfigs relativ zu dem Grundkörper und/oder der Fahrwerkeinheit dienen.

Alternativ oder zusätzlich ist in vorteilhaften Ausgestaltungen mindestens eine Rückstellfeder vorgesehen, welche den Grundkörper in eine obere Position relativ zu der Radachse zwingt. In einer Ausgestaltung erfolgt eine Verstellbewegung aus der oberen Position in eine abgesenkte Position entgegen der Kraft der Rückstellfeder manuell oder mittels Antrieb, wobei bei Wegfall der manuell oder mittels Antrieb aufgebrachten Kraft der Grundkörper lediglich aufgrund der Rückstellkräfte der Rückstellfedern wieder in die obere Position angehoben wird. In vorteilhaften Ausgestaltungen wirken die Rückstellfedern unterstützend zu einer motorisch betriebenen Hubeinheit, wobei insbesondere die Rückstellfedern in einer Ausgestaltung an dem Schlitten in dessen Bewegungsrichtung angreifen.

Die Lenkeinrichtungen oder Routenzug-Moduleinheiten umfassen in einer Ausgestaltung mechanische Übertragungselemente, mittels welcher Lenkkräfte von einem Zugwagen zu den Routenzug-Moduleinheiten übertragbar sind.

In vorteilhaften Ausgestaltungen ist die Lenkeinrichtung als Lenkgetriebe umfassend mindestens einen um eine Hochachse verschenkbaren Radträger, eine in Querrichtung mittels eines Lenkmotors verstellbare Stange, insbesondere einen Zahnstange, und einen den Radträger mit der Stange verbindenden Hebel gestaltet. Vorzugsweise ist eine geteilte Radachse vorgesehen, wobei zwei seitlich angeordneten Rädern jeweils ein eigener Radträger zugeordnet ist und die zwei Radträger jeweils mittels eines Hebels mit der Stange verbunden sind. Durch die Lenkeinrichtung wird eine autarke Moduleinheit geschaffen. Die Lenkeinrichtung ist unabhängig von einer Gestaltung der Kopplungselemente und/oder einer Hubeinheit vorteilhaft einsetzbar.

Bei dem Lenkmotor handelt es sich vorzugsweise um einen elektronisch ansteuerbaren Elektromotor, wobei eine Ansteuerung je nach Anforderung drahtlos oder mittels geeigneter Kabel erfolgt. Alternativ sind jedoch auch ein pneumatisch oder ein hydraulisch betriebener Lenkmotor denkbar. Eine Betriebsmittel und/oder Energieversorgung ist je nach Ausgestaltung und/oder Anforderung mittels einer an der Routenzug-Moduleinheit vorgesehenen Batterie oder eines Akkumulators, drahtlos oder mittels Kabel und Leitungen möglich.

Die Lenkmotoren der einzelnen Routenzug-Moduleinheiten werden dabei in vorteilhaften Ausgestaltungen in einem Master-Slave-Modus oder einem alternativen, hierarchischen Modus betrieben.

Die Hebel greifen in einer Ausgestaltung unmittelbar an der Stange an. In vorteilhaften Ausgestaltungen weist das Lenkgetriebe ein starr mit der Stange verbundenes Joch auf, wobei die Hebel an dem Joch angreifen.

In vorteilhaften Ausgestaltungen ist weiter eine Rückstelleinrichtung, insbesondere eine Feder vorgesehen, wobei die Stange mittels des Lenkmotors entgegen der Kraft einer Rückstelleinrichtung aus einer Mittellage verstellbar ist. Durch die Rückstelleinrichtung wird die Moduleinheit bei einem Ausfall der Lenkeinrichtung in eine Geradeausfahrt gezwungen.

In einer weiteren Ausgestaltungen ist/sind an dem Grundkörper, insbesondere an dem zweiten Kopplungselement, und/oder an der Deichsel, insbesondere an dem ersten Kopplungselement, eine Sensoreinrichtung zur Erfassung einer Auslenkung zwischen zwei aufeinanderfolgenden Routenzug-Moduleinheiten vorgesehen. Die Sensorsignale sind insbesondere in einer Steuerung für die Lenkmotoren der Lenkeinrichtungen nutzbar.

Gemäß einem zweiten Aspekt wird ein Routenzug umfassend mindestens zwei hintereinander gekoppelten Routenzug-Moduleinheiten geschaffen. Die Moduleinheiten sind dabei vorzugsweise lösbar mittels der Kopplungselemente koppelbar. Die Routenzug-Moduleinheiten sind vorzugsweise lösbar miteinander gekoppelt, so dass eine bedarfsindividuelle Zusammenstellung möglich ist.

Gemäß einem dritten Aspekt wird ein Verfahren zum Be- und/oder Entladen eines Routenzugs geschaffen, wobei zum Be- und/oder Entladen mindestens eine, vorzugsweise zwei aufeinanderfolgende Routenzug-Moduleinheiten abgesenkt werden. Lastaufnahmerahmen der Moduleinheiten sind in vorteilhaften Ausgestaltungen zwischen dem Grundkörper einer Routenzug-Moduleinheit und deren an dem Grundkörper der vorangehenden Routenzug-Moduleinheit angekoppelten Deichsel angeordnet. Durch Absenken beider Grundkörper ist dabei ein Absenken des Lastaufnahmerahmens für ein einfaches Be- und/oder Entladen realisierbar.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der schematischen Figuren erläutert sind. Dabei zeigen:
- Fig. 1: einen Routenzug mit einem Zugwagen und mehreren hintereinander gekoppelten Routenzug-Moduleinheiten;
- Fig. 2: einen Abschnitt II des Routenzugs gemäß Fig. 1;
- Fig. 3: eine Draufsicht auf den Routenzug in einem Gebrauch;
- Fig. 4: eine weitere Draufsicht auf den Routenzug in einem Gebrauch;
- Fig. 5: eine Routenzug-Moduleinheit des Routenzugs gemäß Fig. 1 in einer Unteransicht;
- Fig. 6: ein Detail VI aus Fig. 5;
- Fig. 7: eine Routenzug-Moduleinheit des Routenzugs gemäß Fig. 1 in einer geschnittenen Seitenansicht und
- Fig. 8: ein Detail VIII aus Fig. 7.

### DETAILLIERTE BESCHREIBUNG DER AUSFÜHRUNGSBEISPIELE

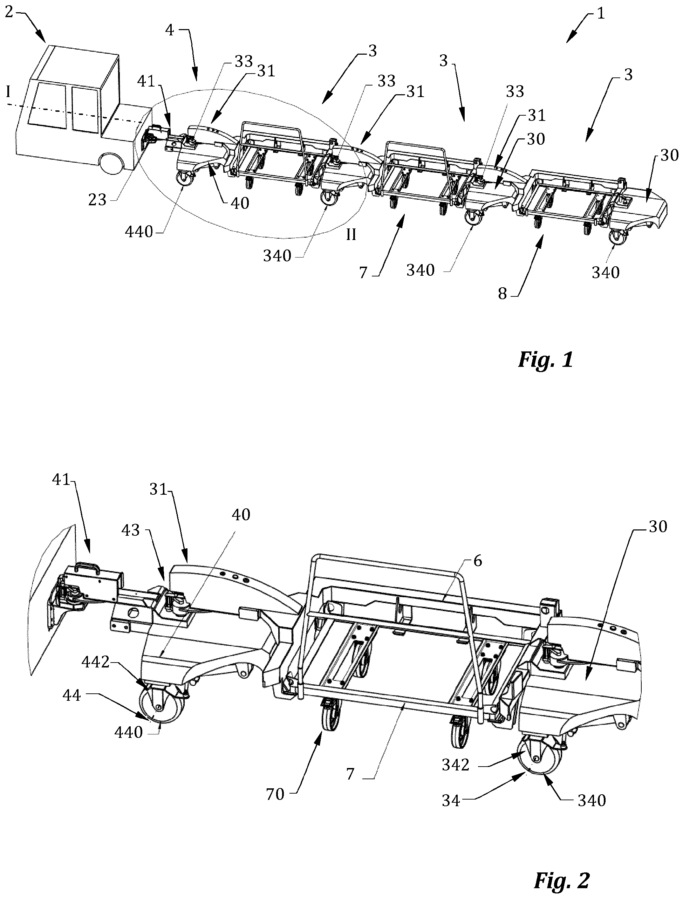

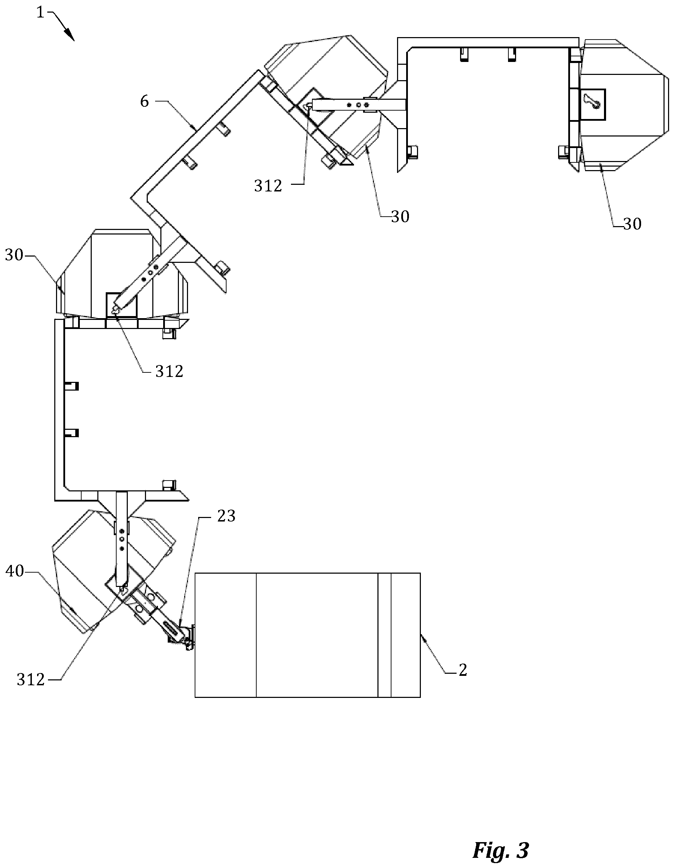

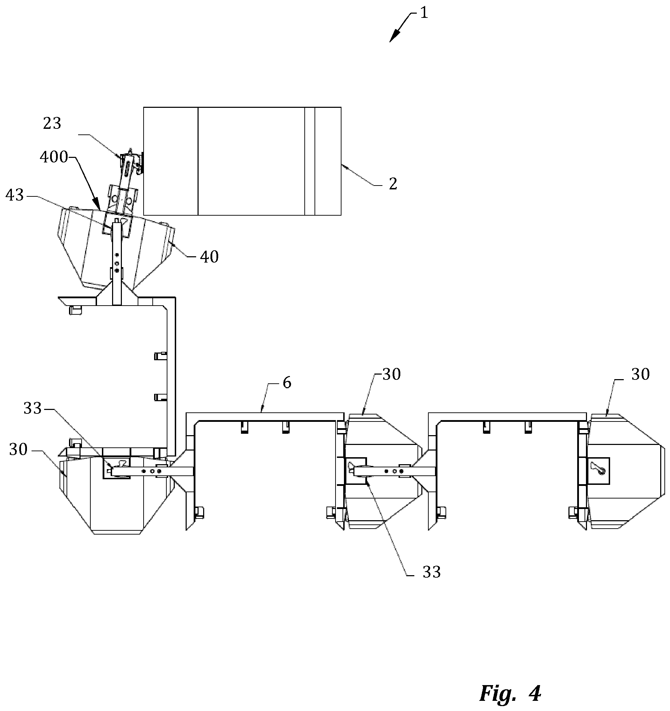

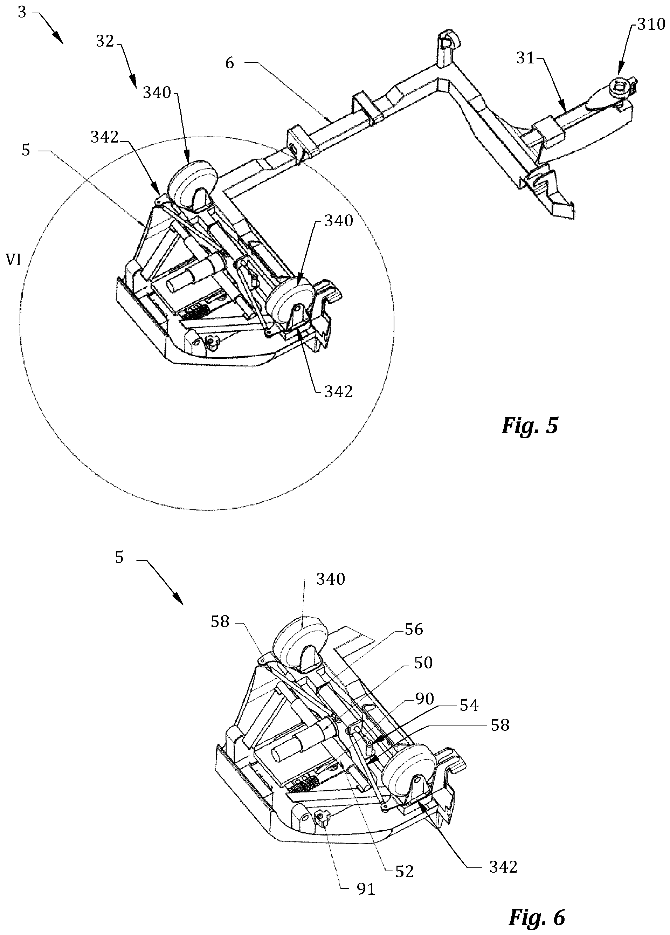

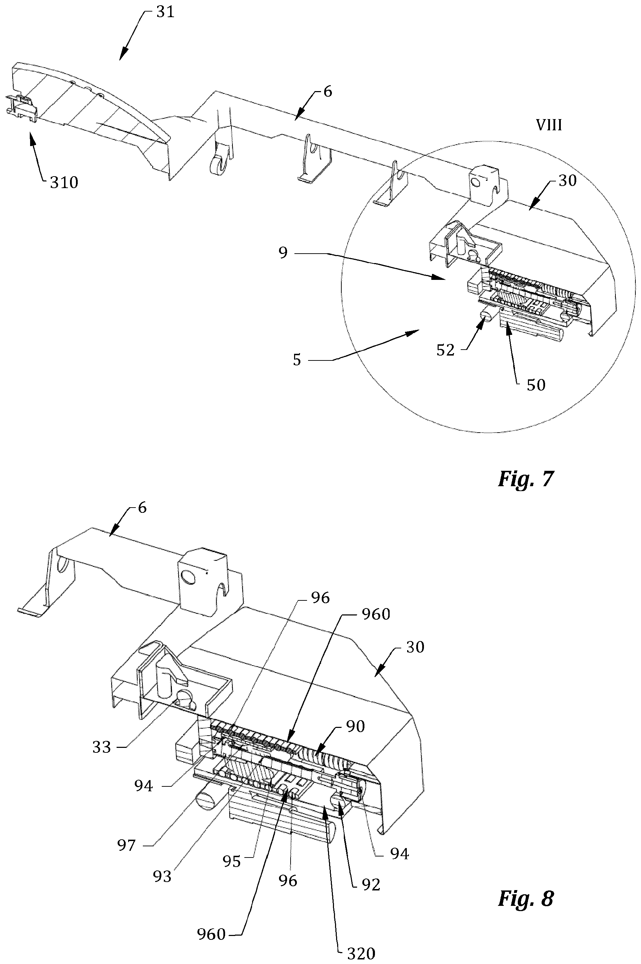

Fig. 1 zeigt einen Routenzug 1 mit einem Zugwagen 2 und mehreren, in dem dargestellten Ausführungsbeispiel vier hintereinander gekoppelten Routenzug-Moduleinheiten 3, 4. Fig. 2 zeigt in Vergrößerung einen Abschnitt II des Routenzugs 1 umfassend zwei Routenzug-Moduleinheiten 3, 4. Fig. 3 und 4 zeigen jeweils eine Draufsicht auf den Routenzug 1 in einem Gebrauch. Fig. 5 und 7 zeigen eine Routenzug-Moduleinheit 3 in einer Unteransicht bzw. in einer geschnittenen Seitenansicht. Fig. 6 und 8 zeigen ein Detail VI aus Fig. 5 bzw. ein Detail VIII aus Fig. 7.

Der Routenzug 1 dient dem Transport von Lasten, wobei mittels des dargestellten Routenzugs 1 insbesondere verfahrbare Palettenträger 7, 8 mit Rädern70 transportiert werden können.

Die in den Fig. 1 bis 8 dargestellten Routenzug-Moduleinheiten 3, 4 umfassen jeweils einen Grundkörper 30, 40. Der Grundkörper 30, 40 ist auf eine an einer Unterseite des Grundkörpers 30, 40 angeordnete, in den Fig. 5 und 6 sichtbare Fahrwerkeinheit 32 mit einer Radachse 34, 44 und einer Lenkeinrichtung 5 zum Aufbringen einer Lenkkraft auf die Radachsen 34, 44 aufgesetzt. An den Radachsen 34, 44 sind jeweils zwei Räder 340, 440 vorgesehen. Die Radachsen 34, 44 sind in dem dargestellten Ausführungsbeispiel geteilt und den Rädern 340, 440 ist jeweils ein eigener, an dem Grundkörper 30, 40 verschwenkbar um eine Hochachse angeordneter Radträger 342, 442 zugeordnet.

An einem vorderen Ende der Grundkörper 30, 40 ist jeweils eine Deichsel 31, 41 vorgesehen. Die Deichsel 31, 41 ist in dem dargestellten Ausführungsbeispiel starr mit dem Grundkörper 30, 40 verbunden.

Dabei ist bei einer ersten, an den Zugwagen 2 unmittelbar anschließenden Routenzug-Moduleinheit 4 in dem dargestellten Ausführungsbeispiel die Deichsel 41 an einer Stirnseite 400 des Grundkörpers 40 angebracht und ortsfest oder starr mit dem Grundkörper 40 verbunden. Die Deichsel 41 ist in Querrichtung betrachtet mittig an dem Grundkörpern 40 angeordnet und ragt parallel zur Längsrichtung I in einem festen Winkel von 90° von der Stirnseite 400 des Grundkörpers 40 ab.

Die drei weiteren Routenzug-Moduleinheit 3 umfassen in dem dargestellten Ausführungsbeispiel jeweils einen als C-Rahmen gestalteten, in Fahrtrichtung vor dem Grundkörper 30 angeordneten Lastaufnahmerahmen 6. Die Deichsel 31 ist dabei an einer Vorderseite des Lastaufnahmerahmens 6 angeordnet. Der Lastaufnahmerahmen 6 ist ortsfest oder starr mit dem Grundkörper 30 verbunden. Die Deichsel 31 ist in Querrichtung betrachtet mittig an der Routenzug-Moduleinheit 3 angeordnet und verläuft parallel zur Längsrichtung I. Die Deichsel 31 und der Lastaufnahmerahmen 6 weisen in einer Ausgestaltung zumindest teilweise gemeinsam gefertigte Bauteile auf. In anderen Ausgestaltungen sind der Lastaufnahmerahmen 6 und die Deichsel 31 getrennt gefertigt. In jedem Fall ist die Deichsel 31 mittels des Lastaufnahmerahmens 6 bezüglich der Längsachse I starr mit dem Grundkörper 30 verbunden.

Die Deichseln 31 weisen ein am besten in Fig. 5 sichtbares, erste Kopplungselement 310 auf.

An den Grundkörpern 30, 40 der Routenzug-Moduleinheiten 3, 4 sowie an dem Zugwagen 2 ist weiter jeweils ein zweites Kopplungselement 23, 33, 43 zum lösbaren Ankoppeln einer nachfolgenden Routenzug-Moduleinheit 3, 4 vorgesehen. Die ersten und zweiten Kopplungselemente 310, 23, 33, 43 sind dabei derart gestaltet, dass die Deichsel 31, 41 einer nachfolgenden Routenzug-Moduleinheit 3, 4 jeweils um eine Hochachse verschwenkbar mit dem Grundkörper 30, 40 einer voranfahrenden Routenzug-Moduleinheit 3, 4 bzw. dem Kopplungselement 23 des Zugwagens 2 lösbar koppelbar ist. In dem dargestellten Ausführungsbeispiel sind die Kopplungselemente 310, 23, 33, 43 als Kugelkopfkopplungselemente gestaltet.

Die zweiten, an den Grundkörpern 30, 40 vorgesehenen Kopplungselemente 33, 43 der Routenzug-Moduleinheiten 3, 4 sind in Richtung der Längsachse I der Routenzug-Moduleinheiten 3, 4 in einem Frontbereich des Grundkörpers 30, 40 angeordnet, wobei die Deichseln 31, 41 der nachfolgenden Routenzug-Moduleinheiten 3 über die Grundkörper 30, 40 geführt sind. Die Deichseln 31, 41 und die Grundkörper 30, 40 sind dabei vorzugsweise derart gestaltet, dass die Deichseln 31, 41 berührungslos über die Grundkörper 30, 40 bei einer in den Fig. 3 und 4 sichtbaren relativen Schwenkbewegung bewegt werden.

Die zweiten Kopplungselemente 33, 43 sind im Bereich der Fahrwerkeinheit 32, 42 an dem Grundkörper 30, 40 angeordnet. Vorzugsweise liegen die Kopplungselemente 33, 43 und die Radachsen 34, 44 zumindest im Wesentlichen in einer Ebene. Dadurch wird - wie in den Fig. 3 und 4 schematisch dargestellt - im Vergleich zu herkömmlichen Moduleinheiten, bei welchen derartige Kopplungselemente hinten an Grundkörpern und damit hinter einer gelenkte Radachse angeordnet sind, ein enger Wendekreis möglich.

An den ersten, an den Deichseln 31, 41 angeordneten Kopplungselementen 310 und/oder an den zweiten Kopplungselementen 33, 43 sind schematisch in Fig. 3 angedeutete Sensoreinrichtungen 312 zur Erfassung einer Auslenkung der Routenzug-Moduleinheit 3, 4 gegenüber einer vorangehenden Routenzug-Moduleinheit 3, 4 und/oder zur Erfassung einer Auslenkung einer nachfolgenden Routenzug-Moduleinheit 3, 4 gegenüber der Routenzug-Moduleinheit 3, 4 vorgesehen.

Informationen bezüglich der Auslenkung der Routenzug-Moduleinheiten 3, 4 sind für eine optimale Ansteuerung der Lenkeinrichtungen 5 nutzbar.

In dem dargestellten Ausführungsbeispiel ist die Lenkeinrichtung 5 wie in den Fig. 5 und 6 erkennbar als Lenkgetriebe gestaltet. Die Lenkeinrichtung 5 einer Routenzug-Moduleinheit 3, 4 umfasst einen Lenkmotor 50, mittels welchem eine Stange, insbesondere eine Zahnstange 52 in Querrichtung verstellbar ist. An der Zahnstange 52 ist ein Joch 54 angebracht, welches entgegen der Kraft eines Federpakets 56 aus einer Mittellage verstellbar ist. Das Joch 54 ist mittels zweier Hebel 58 mit den Radträgern 342 für eine Verschwenkung der Radträger 342 um Hochachsen verbunden.

In Fig. 5 und 6 sind weiter eine Rückstellfeder 90 und ein Höhensensor 91 einer in den Fig. 7 und 8 dargestellten Hubeinheit 9 zum Anheben und/oder Absenken des Grundkörpers 30, 40 gegenüber der Radachse 34, 44 sichtbar.

Die dargestellte Hubeinheit 9 ist als Scheren-Hubwerk gestaltet, wobei ein Rahmen des Grundkörpers 30 als erster Schenkel des Scheren-Hubwerk und ein Tragrahmen 320 der Fahrwerkeinheit 32 als zweiter Schenkel dient. Die Schenkel sind über ein Gelenk 92 miteinander um eine Querachse verschwenkbar gekoppelt.

Die Hubeinheit 9 umfasst weiter eine parallel zur Längsachse der Moduleinheit 3 angeordnete Spindel 93, welche mittels Lager 94 ortsfest an dem Grundkörper 30 angeordnet ist. An der Spindel 93 ist ein relativ zu der Spindel 93 verfahrbarer Schlitten 95 vorgesehen.

Der Schlitten 95 ist mittels eines oberen und eines unteren Rollenlagers 96 verschieblich an dem Grundkörper 30 und dem Tragrahmen 320 gelagert. In dem dargestellten Ausführungsbeispiel weisen die Rollenlager 96 jeweils einen verschieblich gelagerten Rollenkäfig 960 auf, wobei der Schlitten 95 relativ zu den Rollenkäfigen 960 und die Rollenkäfige 960 relativ zu dem Grundkörper 30 bzw. dem Tragrahmen 320 verschieblich sind. Durch die verschiebliche Anordnung sind kurze Rollenkäfige 960 einsetzbar.

An dem Schlitten 95 ist weiter eine Feder 97 vorgesehen, welche senkrecht zu der Spindelachse wirkt. Diese dient einer Federung der Fahrwerkeinheit 32 und der Hubeinheit 9.

Ein Kraft-Weg-Übersetzungsverhältnis der dargestellten Hubeinheit 9 ist über die Längsrichtung der Spindel 93 nicht konstant. Für eine Kompensation sind in dem dargestellten Ausführungsbeispiel zwei zusätzliche Rückstellfedern 90 vorgesehen. Bei einer Verstellbewegung zum Absenken des Grundkörpers 30 bezüglich des Tragrahmens 320, d. h. bei einer Bewegung des Schlittens 95 nach rechts in Fig. 8, werden die Rückstellfedern 90 komprimiert, sodass Energie in den Rückstellfedern 90 gespeichert wird. Diese Energie wird bei einem Start eines Hebevorgangs wieder freigegeben und unterstützt so die Hubbewegung.

Die zwei Rückstellfedern 90 sind parallel zu der Spindel 93 neben dieser angeordnet, wobei in den Figuren 5 bis 8 jeweils nur eine Rückstellfeder 90 sichtbar ist.

Ein Absenken mittels der Hubeinheit 9 wird über den bereits erwähnten, in Fig. 6 dargestellten Höhensensor 91 überwacht.

Der Routenzug 1 dient dem Transport von Lasten, wobei mittels des dargestellten Routenzugs 1 wie bereits erwähnt insbesondere verfahrbare Palettenträger 7, 8 mit Rädern 70 transportiert werden können. Dabei weisen drei der vier dargestellten Routenzug-Moduleinheiten 3, 4 einen C-förmiger Lastaufnahmerahmen 6 auf. Für ein Beladen eines Lastaufnahmerahmens 6 werden zumindest der Grundkörper 30 der zugehörigen Routenzug-Moduleinheit 3 sowie ein Grundkörper 30, 40 einer vorausfahrenden Routenzug-Moduleinheiten 3, 4 abgesenkt. Nach einem Absenken sind die verfahrbare Palettenträger 7, 8 mittels ihrer Räder 70 von einer Seite einschiebbar. Nach einem Beladen werden die Grundkörper 30, 40 wieder in die obere Position angehoben, sodass die Räder 70 wie am besten in Fig. 2 erkennbar ist von einem Untergrund beabstandet sind. Bei einem anschließenden Verfahren des Routenzugs 1 verbleiben die Räder 70 beabstandet zu dem Untergrund. Für ein Entladen können erneut zumindest der Grundkörper 30 der zugehörigen Routenzug-Moduleinheit 3 sowie ein Grundkörper 30, 40 einer vorausfahrenden Routenzug-Moduleinheiten 3, 4 abgesenkt werden. Nach einem Absenken sind die verfahrbare Palettenträger 7, 8 mittels ihrer Räder 70 in Richtung der offenen Seite des C-förmigen Lastaufnahmerahmens 6 verschiebbar und so auf einfache Weise entfernbar. Es ist für den Fachmann offensichtlich, dass anstelle des C-förmigen Lastaufnahmerahmens 6 auch andere Lastaufnahmerahmen vorgesehen werden können, wobei in vorteilhaften Ausgestaltungen ebenfalls ein Absenken und Anheben der Grundkörper 30, 40 für ein Be- oder Entladen möglich ist.

In dem dargestellten Ausführungsbeispiel unterscheidet sich die erste an den Zugwagen 2 unmittelbar angeschlossene Routenzug-Moduleinheit 4 von den anderen Routenzug-Moduleinheiten 3, da diese ohne Lastaufnahmerahmen 6 gestaltet ist. Die Routenzug-Moduleinheit 4 dient einem Absenken eines Lastaufnahmerahmens 6 einer nachfolgenden Routenzug-Moduleinheit 3. Insbesondere sofern die Routenzug-Moduleinheiten 3, 4 in einer abgewandelten Ausgestaltung ohne Hubeinheiten 9 gestaltet sind, kann auf diese Routenzug-Moduleinheit 4 verzichtet werden.

## Patentansprüche

1. Routenzug-Moduleinheit zum Aufbau eines Routenzugs (1) aus mehreren hintereinander gekoppelten Routenzug-Moduleinheiten (3, 4) umfassend
- eine Fahrwerkeinheit (32) mit einer Radachse (34) und einer Lenkeinrichtung (5) zum Aufbringen einer Lenkkraft auf die Radachse (34),
- einen auf der Fahrwerkeinheit (32) angeordneten Grundkörper (30, 40),
- eine von dem Grundkörper (30, 40) mit einem festen Winkel nach vorne abragende Deichsel (31, 41) mit einem ersten Kopplungselement (310, 410) zum Ankoppeln an eine vorausfahrende Routenzug-Moduleinheit (3, 4) oder einen Zugwagen (2), und
- ein an dem Grundkörper vorgesehenes, mit dem ersten Kopplungselement (310, 410) einer nachfolgenden Routenzug-Moduleinheit zusammenwirkendes zweites Kopplungselement (33, 43),
wobei mittels der Kopplungselemente (310, 410, 33, 43) die Deichsel (31, 41) einer nachfolgenden Routenzug-Moduleinheit (3, 4) um eine Hochachse verschwenkbar mit dem Grundkörper (30, 40) koppelbar ist und/oder die Deichsel (31, 41) um eine Hochachse verschwenkbar mit dem Grundkörper (30, 40) einer vorausfahrenden Routenzug-Moduleinheit (3, 4) oder mit einem Zugwagen koppelbar ist,
**dadurch gekennzeichnet, dass**
das zweite Kopplungselement (33, 43) in Richtung der Längsachse der Routenzug-Moduleinheit (3, 4) im Bereich der Fahrwerkeinheit (32) an dem Grundkörper (30, 40) angeordnet ist.

2. Routenzug-Moduleinheit nach Anspruch 1, **dadurch gekennzeichnet, dass** zwischen der Deichsel (31) und dem Grundkörper (30) ein mit dem Grundkörper (30) verbundener Lastaufnahmerahmen (6) angeordnet ist.

3. Routenzug-Moduleinheit nach Anspruch 1, **dadurch gekennzeichnet, dass** die Deichsel (41) an einer Stirnseite des Grundkörpers (4) von dieser abragend angebracht ist.

4. Routenzug-Moduleinheit nach einem der Ansprüche 1, 2 oder 3, **dadurch gekennzeichnet, dass** die Fahrwerkeinheit (32, 42) und das Kopplungselement (33, 43) in einem Frontbereich des Grundkörpers (3, 4) angeordnet sind.

5. Routenzug-Moduleinheit nach einem der Ansprüche 1 bis 4, **dadurch gekennzeichnet, dass** die Kopplungselemente (310, 410, 33, 43) als Kugelkopfkopplungselemente gestaltet ist.

6. Routenzug-Moduleinheit nach einem der Ansprüche 1 bis 5 oder dem Oberbegriff des Anspruchs 1, **dadurch gekennzeichnet, dass** der Grundkörper (30, 40) bezüglich der Radachse (34, 44) höhenveränderlich gelagert ist.

7. Routenzug-Moduleinheit nach Anspruch 6, **dadurch gekennzeichnet, dass** eine Hubeinheit (9) zum Anheben und/oder Absenken des Grundkörpers vorgesehen ist, wobei die Hubeinheit (9) vorzugsweise als Scheren-Hubwerk gestaltet ist.

8. Routenzug-Moduleinheit nach Anspruch 7, **dadurch gekennzeichnet, dass** die Hubeinheit (9) eine ortsfest an dem Grundkörper (30, 40) oder der Fahrwerkeinheit (32) angeordnete Spindel (93) und einen relativ zu der Spindel (92) verfahrbaren Schlitten (94) umfasst.

9. Routenzug-Moduleinheit nach Anspruch 8, **dadurch gekennzeichnet, dass** der Schlitten (95) mittels Rollenlager (96) verschieblich gelagert ist, wobei die Rollenlager (96) in vorteilhaften Ausgestaltungen einen verschieblich gelagerten Rollenkäfig (960) umfasst.

10. Routenzug-Moduleinheit nach einem der Ansprüche 6 bis 9, **dadurch gekennzeichnet, dass** mindestens eine Rückstellfeder (90) vorgesehen ist, welche den Grundkörper (30, 40) in eine obere Position relativ zu der Radachse (34, 44) zwingt.

11. Routenzug-Moduleinheit nach einem der Ansprüche 1 bis 10 oder dem Oberbegriff des Anspruchs 1, **dadurch gekennzeichnet, dass** die Lenkeinrichtung (5) als Lenkgetriebe umfassend mindestens einen, vorzugsweise zwei jeweils um eine Hochachse verschenkbare(n) Radträger (342), eine in Querrichtung mittels eines Lenkmotors (50) verstellbare Stange, insbesondere einen Zahnstange (52), und einen bzw. zwei den oder die Radträger (342) mit der Stange verbindende(n) Hebel (58) gestaltet ist, wobei insbesondere das Lenkgetriebe ein starr mit der Stange verbundenes Joch (54) aufweist und die Hebel (58) an dem Joch (54) angreifen.

12. Routenzug-Moduleinheit nach Anspruch 11, **dadurch gekennzeichnet, dass** die Stange mittels des Lenkmotors entgegen der Kraft einer Rückstelleinrichtung (56) aus einer Mittellage verstellbar ist.

13. Routenzug-Moduleinheit nach einem der Ansprüche 1 bis 12, **dadurch gekennzeichnet, dass** an dem Grundkörper (30, 40), insbesondere an dem zweiten Kopplungselement (33, 43), und/oder an der Deichsel (31, 41), insbesondere an dem ersten Kopplungselement (310, 410), eine Sensoreinrichtung (312) zur Erfassung einer Auslenkung zwischen zwei aufeinanderfolgenden Routenzug-Moduleinheiten (3, 4) vorgesehen ist/sind.

14. Routenzug umfassend einen Zugwagen und mehrere hintereinander gekoppelten Routenzug-Moduleinheiten (34) nach einem der Ansprüche 1 bis 10.

15. Verfahren zum Be- und/oder Entladen eines Routenzugs nach Anspruch 11, wobei zum Be- und/oder Entladen mindestens eine, vorzugsweise zwei aufeinanderfolgende Routenzug-Moduleinheiten (34) abgesenkt werden.
